# FASCICULE DE BREVET EUROPEEN

(11) **EP 4 313 693 B1**
(45) Date de publication et mention de la délivrance du brevet: **01.04.2026**
(21) Numéro de dépôt: 22712019.3
(22) Date de dépôt: 23.02.2022
(51) Int. Cl.: B60R 19/48, B60Q 1/00

(54) **ÉLÉMENT DE PARE-CHOCS COMPORTANT UNE TRAPPE D'ACCÈS À INTERFACE MULTIPLE**
STOSSFÄNGERELEMENT MIT EINER ZUGANGSKLAPPE MIT MEHREREN SCHNITTSTELLEN
BUMPER ELEMENT COMPRISING A MULTI-INTERFACE ACCESS HATCH

(30) Priorité: 26.03.2021 FR 2103108
(43) Date de publication de la demande: 07.02.2024
(73) Titulaire: Stellantis Auto SAS, 78300 Poissy (FR)
(72) Inventeur: BOUDAN, Julien, 91210 DRAVEIL (FR)
(74) Mandataire: BCIP
(86) Numéro de dépôt international: PCT/FR2022/050332
(87) Numéro de publication internationale: WO 2022/200707

(56) Documents cités:
- EP-A2- 1 889 752
- DE-A1- 102016 012 514

## Description

La présente invention revendique la priorité de la demande française 2103108 déposée le 26 mars 2021.

Le domaine technique concerne les éléments de pare-chocs entrant dans la constitution d'une pare-chocs de véhicule et présentant une trappe d'accès.

L'invention concerne également les faces arrière de véhicules comportant un tel élément de pare-chocs et les véhicules ainsi équipés.

Les constructeurs d'automobiles accordent une très grande importance à l'aspect esthétique de leurs véhicules et doivent constamment innover afin de proposer de nouvelles formes. En effet, outres les contraintes techniques qui peuvent s'avérer nécessaires pour mettre en œuvre certains choix esthétiques, la réglementation peut également imposer des contraintes supplémentaires pour des raisons liées à la sécurité ou à la maintenance du véhicule.

Ainsi, lorsqu'un constructeur d'automobiles choisit d'implanter un dispositif optique dans un pare-chocs arrière, la réglementation impose de prévoir un accès au dispositif optique qui ne nécessite pas de déposer le pare-chocs.

Par ailleurs sur les véhicules modernes, les pare-chocs, notamment les pare-chocs arrière, intègrent de multiples fonctions telles que les feux antibrouillard et sont le lieu de nombreuses interfaces entre plusieurs pièces telles que les pare-boues ou les déflecteurs aérodynamiques de bas de caisse. Ces diverses pièces demandent des fixations et il est souvent très difficile de libérer de l'espace pour disposer les moyens de fixations nécessaires pour assurer la tenue des pièces, avec des interfaces dépourvues de défauts visuels.

Aussi, certains choix esthétiques peuvent s'avérer trop contraignants à mettre en œuvre. C'est le cas, par exemple, lorsque le pare-chocs est constitué de plusieurs éléments : les feux arrière peuvent difficilement être disposés près des interfaces entre les diverses pièces et éléments.

Ainsi, il existe un besoin d'une solution technique permettant de faciliter l'implantation des feux arrière dans un pare-chocs arrière, notamment à proximité des interfaces entre les différents éléments ou pièces.

La présente invention a pour objet de pallier les problèmes exposés précédemment. Dans ce contexte technique, un but de la présente invention est de fournir un élément de pare-chocs permettant de disposer des trappes d'accès hà proximité des interfaces.

A cet effet, la présente invention se rapporte à une face arrière de véhicule selon la revendication 1.

Sélon l'invention, les moyens de verrouillage permettant la fixation de la partie mobile sur au moins un élément additionnel en position de fermeture pour assurer le maintien de l'élément additionnel sur l'élément de pare-chocs.

Enfin, l'invention se rapporte à un véhicule équipé d'une face arrière selon l'invention.

Ainsi, l'élément de pare-chocs selon l'invention permet de disposer d'une trappe d'accès à l'espace situé à l'intérieur du pare-chocs, lorsqu'il est installé sur un véhicule, afin de permettre la maintenance sur un feu arrière, par exemple. En position de fermeture, la partie mobile peut être maintenue dans cette position grâce aux moyens de verrouillage. La partie mobile, en position de fermeture, présente un bord qui prolonge le pourtour de l'élément de pare-chocs. Ainsi, la partie mobile, en position de fermeture, contribue à l'interface entre l'élément de pare-chocs selon l'invention et un élément additionnel de la face arrière du véhicule selon l'invention. Les moyens de verrouillage permettent alors le verrouillage de la partie mobile, et donc de l'élément de pare-chocs avec un élément additionnel. La partie mobile permet donc d'obtenir une trappe d'accès et contribue à la fixation du ou des éléments additionnels. L'élément de pare-chocs selon l'invention permet donc de positionner des feux arrière à proximité des interfaces entre l'élément de pare-chocs et les éléments additionnels.

Selon une possibilité de l'invention, la partie mobile vient de matière avec l'élément de pare-chocs et est articulée par une charnière obtenue par réduction d'épaisseur de l'élément de pare-chocs. Une telle partie mobile est facile à obtenir lors du moulage de l'élément de pare-chocs.

Selon un mode de réalisation, les moyens de verrouillage comportent des moyens de clipsage et/ou des moyens de vissage.

Selon une possibilité de la face arrière, l'élément additionnel comporte un pare-boue et/ou un déflecteur d'air.

Avantageusement, la partie mobile forme une trappe d'accès à un dispositif de feu arrière.

L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue en perspective d'une face arrière de véhicule selon l'invention comportant un élément de pare-chocs selon l'invention ;
[Fig. 2] la figure 2, représente une vue en perspective de l'intérieur d'un pare-chocs illustré sur la figure 1 montrant un élément de pare-chocs selon l'invention ;
[Fig. 3] la figure 3, représente une vue de l'élément de la figure 2 fixé à des éléments additionnels.

Dans ces figures, les mêmes références sont utilisées pour désigner les mêmes éléments.

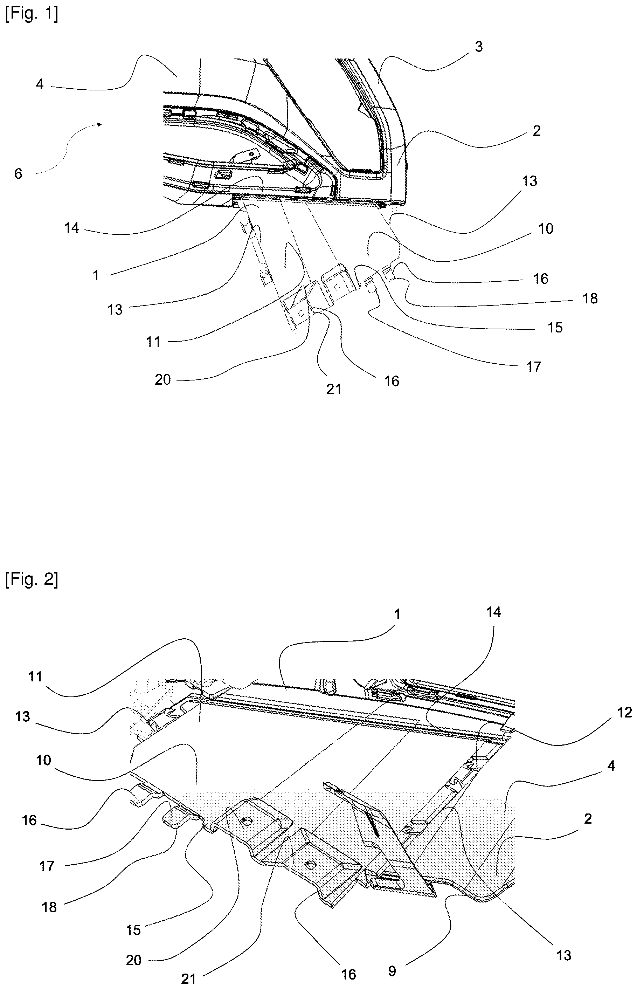

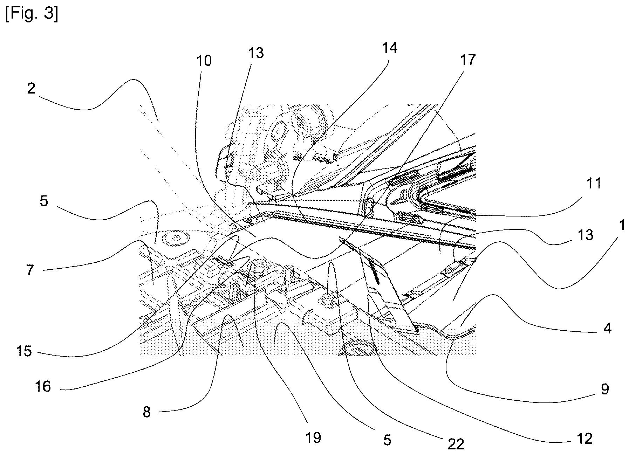

Un élément 1 de pare-chocs selon l'invention, illustré sur les figures 1 à 3, constitue au moins une partie d'un pare-chocs 2 d'un véhicule 3 automobile visibles partiellement sur la figure 1. Par exemple, le pare-chocs 2 est constitué d'une peau de pare-chocs, non représentée, et de l'élément 1 de pare-chocs selon l'invention formant, en l'occurrence, une jupe de pare-chocs 4. L'élément 1 de pare-chocs est par exemple constitué de matières plastiques. L'élément 1 de pare-chocs assemblé sur le véhicule avec, au moins un, en l'occurrence deux éléments additionnels 5 forment une face arrière 6 de véhicule selon l'invention, illustrée sur la figure 3. Dans le mode de réalisation illustré sur les figures, un élément additionnel 5, illustrés sur la figure 3, forme un pare-boue 7 et un autre élément additionnel 5 forme un déflecteur d'air 8, visible également sur la figure 3.

L'élément 1 de pare-chocs selon l'invention est délimité par un pourtour 9, illustré sur les figures 2 et 3, et comporte une partie mobile 10, illustrée sur les figures. Cette partie mobile 10 est destinée à former une trappe d'accès 11 aux parties internes du pare-chocs 2, lorsque l'élément 1 de pare-chocs est installé sur le véhicule. La partie mobile 10 est donc conçue pour obturer au moins en partie, dans une position dite de fermeture illustrée sur la figure 3, une découpe 12, illustrée sur les figures 2 et 3, ménagée dans l'élément 1 de pare-chocs. La découpe 12 débouche sur au moins une partie du pourtour 9 de l'élément 1. Ainsi, la partie mobile 10 est facilement obtenue par découpage de l'élément 1 suivant deux côté latéraux 13 de la partie mobile 10.

Dans le mode de réalisation illustré sur les figures, la partie mobile 10 vient de matière avec l'élément 1 de de pare-chocs et est articulée par une charnière 14 obtenue par réduction d'épaisseur de l'élément 1 de pare-chocs. La charnière 14 permet ainsi de rendre la partie mobile 10 déplaçable entre la position de fermeture et une position ouverte, illustrée sur la figure 1, dans laquelle l'accès à l'intérieur du pare-chocs 2 est possible.

La partie mobile 10 comporte au moins un bord 15 qui prolonge le pourtour 9 dans la position de fermeture. Le bord 15 de la partie mobile 10 présente des moyens de verrouillage 16 qui permettent la fixation de la partie mobile 10 dans la position de fermeture, lorsque l'élément 1 de pare-chocs est installé sur le véhicule. Les moyens de verrouillage 16 sont conçus pour permettre la fixation de la partie mobile 10 sur au moins un élément additionnel 5. Dans l'exemple illustré sur les figures, en particulier sur la figure 3, les moyens de verrouillage 16 sont conçus pour fixer la partie mobile 10 sur le pare-boue 7 et sur le déflecteur d'air 8. A cette fin, les moyens de verrouillage 16 comportent, par exemple, des moyens de clipsage 17 pour assurer la liaison et la fixation de l'élément 1 de pare-chocs au pare-boue 7. Les moyens de clipsage 17 sont par exemple formés d'une languette 18 déformable et venant de matière avec la partie mobile 10 coopérant avec une butée 19 ménagés sur le pare-boue 7. Les moyens de verrouillage 16, dans l'exemple illustré sur les figures, comporte également des moyens de vissage 20. Les moyens de vissage 20 comportent, par exemple, un lamage 21 ou un alésage ménagé sur la partie mobile 10, illustré sur la figure 2, positionné de façon à ce qu'une vis, non représentée, puisse y être introduite et vissée dans un trou taraudé 22 ménagé sur le déflecteur d'air 8, par exemple, comme illustré sur la figure 3.

Ainsi, l'élément 1 de pare-chocs selon l'invention permet de former un pare-chocs 2 muni d'une trappe d'accès 11. Cette trappe d'accès 11 est ménagée à l'interface entre le pare-chocs 2 et au moins un élément additionnel 5 tels que le pare-boue 7 et le déflecteur d'air 8. Les moyens de verrouillage 16 permettent de maintenir la trappe d'accès 11 en position de fermeture tout en permettant la fixation des éléments additionnels 5. L'interface entre le pare-chocs 2 et les éléments additionnels 5 est dépourvue de défauts visuels.

L'invention ne se limite pas au mode de réalisation de l'élément de pare-chocs décrit ci-avant, seulement à titre d'exemple, mais d'autres modes de réalisation peuvent être conçus par l'homme de métier sans sortir du cadre et de la portée de la présente invention, qui est définie par les revendications ci-dessous.

## Revendications

1. Face arrière (6) de véhicule comportant au moins un élément (1) de pare-chocs et au moins un élément additionnel (5), l'élément (1) de pare-chocs étant délimité par un pourtour (9) et comportant un partie mobile (10) destinée à former une trappe d'accès (11) aux parties internes du pare-chocs (2), lorsque l'élément (1) de pare-chocs est installé sur le véhicule (3), la partie mobile (10) étant conçue pour obturer au moins en partie, dans une position dite de fermeture, une découpe (12) ménagée dans l'élément (1) de pare-chocs, la découpe (12) débouchant sur au moins une partie du pourtour (9) de l'élément (1), la partie mobile (10) comportant au moins un bord (15) prolongeant le pourtour (9) dans la position de fermeture, le bord (15) présentant des moyens de verrouillage (16) permettant la fixation de la partie mobile (10) dans la position de fermeture lorsque l'élément (1) est installé sur le véhicule (3), **caractérisé en ce que** les moyens de verrouillage (16) permettant la fixation de la partie mobile (10) sur au moins un élément additionnel (5) en position de fermeture pour assurer le maintien de l'élément additionnel (5) sur l'élément (1) de pare-chocs.

2. Face arrière (6) selon la revendication 1, **caractérisé en ce que** la partie mobile (10) vient de matière avec l'élément (1) de pare-chocs et est articulée par une charnière (13) obtenue par réduction d'épaisseur de l'élément (1) de pare-chocs.

3. Face arrière (6) selon la revendication 1 ou 2, **caractérisé en ce que** les moyens de verrouillage (16) comportent des moyens de clipsage (17) et/ou des moyens de vissage (20).

4. Face arrière (6) selon l'une quelconque des revendications précédentes, **caractérisé en ce que** l'élément additionnel (5) comporte un pare-boue (7) et/ou un déflecteur d'air (8).

5. Face arrière (6) selon l'une quelconque des revendications précédentes, **caractérisé en ce que** la partie mobile (10) forme une trappe d'accès (11) à un dispositif de feu arrière.

6. Véhicule (3) équipé d'une face arrière (6) selon l'une des revendications précédentes.

## Patentansprüche

1. Fahrzeugheckseite (6) mit mindestens einem Stoßfängerelement (1) und mindestens einem zusätzlichen Element (5), wobei das Stoßfängerelement (1) durch einen Umfang (9) begrenzt ist und einen beweglichen Teil (10) zur Bildung einer Zugangsklappe (11) zu den Innenteilen des Stoßfängers (2) aufweist, wenn das Stoßfängerelement (1) am Fahrzeug (3) angebracht ist, wobei der bewegliche Teil (10) dazu ausgebildet ist, in einer so genannten Schließstellung einen Ausschnitt (12) in dem Element zumindest teilweise zu verschließen (1) eines Stoßfängers, wobei der Ausschnitt (12) in mindestens einem Teil des Umfangs (9) des Elements (1) mündet, wobei das bewegliche Teil (10) mindestens einen Rand (15) aufweist, der den Umfang (9) in der Schließstellung verlängert, wobei der Rand (15) Verriegelungsmittel (16) aufweist, die die Befestigung des beweglichen Teils (10) in der Schließstellung ermöglichen, wenn das Element (1) am Fahrzeug (3) angebracht ist, **dadurch gekennzeichnet, dass** die Verriegelungsmittel (16) die Befestigung des beweglichen Teils (10) an mindestens einem zusätzlichen Element ermöglichen (5) in der Schließstellung, um sicherzustellen, dass das zusätzliche Element (5) auf dem Stoßfängerelement (1) gehalten wird.

2. Rückwand (6) nach Anspruch 1, **dadurch gekennzeichnet, dass** das bewegliche Teil (10) einstückig mit dem Stoßfängerelement (1) ausgebildet und durch ein Scharnier (13) angelenkt ist, das durch Dickenreduktion des Stoßfängerelements (1) erhalten wird.

3. Rückseite (6) nach Anspruch 1 oder 2, **dadurch gekennzeichnet, dass** die Verriegelungsmittel (16) Einrastmittel (17) und/oder Schraubmittel (20) aufweisen.

4. Rückwand (6) nach einem der vorhergehenden Ansprüche, **dadurch gekennzeichnet, dass** das zusätzliche Element (5) eine Schlammschutzwand (7) und/oder einen Luftabweiser (8) aufweist.

5. Rückwand (6) nach einem der vorhergehenden Ansprüche, **dadurch gekennzeichnet, dass** das bewegliche Teil (10) eine Zugangsklappe (11) zu einer Rücklichtvorrichtung bildet.

6. Fahrzeug (3) mit einer Rückfläche (6) nach einem der vorhergehenden Ansprüche.

## Claims

1. Vehicle rear face (6) comprising at least one bumper item (1) and at least one additional item (5), the bumper item (1) being defined by a periphery (9) and comprising a movable part (10) intended to form an access hatch (11) to the internal parts of the bumper (2), when the bumper item (1) is installed on the vehicle (3), the movable part (10) being designed to close at least in part, in a so-called closing position, a cutout (12) formed in the bumper item (1), the cutout (12) opening onto at least part of the periphery (9) of the item (1), the movable part (10) comprising at least one rim (15) (9) in the closing position, the edge (15) having locking means (16) allowing the mobile part (10) to be fixed in the closing position when the item (1) is installed on the vehicle (3), wherein the locking means (16) allowing the mobile part (10) to be fixed on at least one additional item (5) in the closing position to ensure the maintenance of the additional item (5) on the bumper item (1).

2. The rear face (6) according to claim 1, wherein the movable part (10) is integral with the bumper item (1) and is articulated by a hinge (13) obtained by reducing the thickness of the bumper item (1).

3. rear face (6) according to claim 1 or 2, wherein the locking means (16) comprise clipping means (17) and/or screwing means (20).

4. rear face (6) according to any one of the previous claims, wherein the additional item (5) comprises a mud barrier (7) and/or an air deflector (8).

5. rear face (6) according to any one of the previous claims, wherein the movable part (10) forms an access hatch (11) to a rear lamp device.

6. Vehicle (3) equipped with a rear face (6) according to one of the previous claims.
